# EUROPÄISCHE PATENTANMELDUNG

(11) **EP 4 850 869 A2**
(43) Veröffentlichungstag der Anmeldung: **09.12.2026**
(21) Anmeldenummer: 26182662.2
(22) Anmeldetag: 02.06.2026
(51) Int. Cl.: B25J 9/10, B25J 9/04

(54) **INDUSTRIEROBOTER**

(30) Priorität: 05.06.2025 DE 102025122055
(71) Anmelder: autonox Robotics GmbH, 77731 Willstätt (DE)
(72) Erfinder: Haas, Guillaume, 67150 Gerstheim (FR); Stocker, Tim, 77749 Hohberg-Hofweier (DE); Perl, Kurt, 83253 Rimsting (DE); Martl, Andreas, 83104 Tuntenhausen (DE); Reichert, Christian, 83109 Großkarolinenfeld (DE); Kirschner, Peter, 83556 Griesstätt (DE)
(74) Vertreter: Geitz Patentanwälte PartG mbB

(57) **Zusammenfassung**

Es wird ein Industrieroboter (1) mit einer seriellen Kinematik vorgeschlagen, welche für eine große Traglast ausgebildet ist, mit einem Karussell (3), welches an einer Roboterbasis (2) drehbar aufgenommen sein kann, mit einer an dem Karussell (3) drehbar aufgenommenen Schwinge (6) und mit einem an der Schwinge (6) drehbar aufgenommenen Armausleger (10). Der Industrieroboter ist mit einer Stützstruktur ausgestattet, welche die Schwinge (6) von zwei Seiten unterstützt. Dabei weist die Stützstruktur zwei der Schwinge (6) zugeordnete Schwinge-Stützstangen (22, 23) mit fest vorgegebener Länge auf. Jede der Schwinge-Stützstangen (22, 23) ist mit einem ersten Ende an dem Karussell (3) und mit einem zweiten Ende mittelbar oder unmittelbar drehbar um die dritte geometrische Antriebsachse (12) an der Kinematik aufgenommen.

## Beschreibung

Die Erfindung geht aus von einem Industrieroboter mit einer seriellen Kinematik, welche für eine große Traglast ausgebildet ist.

Derartige Industrieroboter dienen zum Positionieren und Bewegen eines Manipulators oder Endeffektors in mindestens zwei Dimensionen im Raum. Die Kinematik umfasst ein Karussell, welches an einer Roboterbasis drehbar angeordnet wird, eine Schwinge und einen Armausleger, an welchem eine Effektorhalterung zur Aufnahme des Endeffektors angeordnet wird. Die Roboterbasis wird auch als Grundgestell bezeichnet. Sie kann fester Bestandteil des Industrieroboters sein. Alternativ dazu kann die Roboterbasis durch einen Maschinenrahmen gebildet werden, an dem der Industrieroboter angeordnet wird. In diesem Fall ist die Roboterbasis kein fester Bestandteil des Industrieroboters. Die Effektorhalterung wird auch als Effektorträger bezeichnet. Der Effektorträger kann fester Bestandteil des Industrieroboters sein und zusammen mit dem Industrieroboter an einen Kunden ausgeliefert werden. Alternativ dazu kann der Industrieroboter ohne Effektorträger an einen Anwender ausgegeben werden, wobei der Anwender selbst den Industrieroboter mit einem an seine Anforderungen angepassten Effektorträger mit Effektor ausstattet. Der Endeffektor bildet das letzte Element der kinematischen Kette, welche das Karussell, die Schwinge und den Armausleger umfasst. Der Endeffektor wird auch als Manipulator bezeichnet, der die physikalische Interaktion mit der Umgebung des Industrieroboters ausführt. Als Endeffektor oder Manipulator wird beispielsweise ein Greifer oder ein Werkzeug eingesetzt, welche die Stückgüter insbesondere aufnehmen und umsetzen. Die Bewegung der Effektorhalterung relativ zu der Roboterbasis erfolgt mittels der Kinematik. Hierzu sind mehrere Antriebe vorgesehen: ein erster Antrieb, der das Karussell um eine erste geometrische Antriebsachse relativ zu der Roboterbasis dreht, ein zweiter Antrieb, der die Schwinge um eine zweite geometrische Antriebsachse relativ zu dem Karussell dreht, ein dritter Antrieb, der den Armausleger um eine dritte geometrische Antriebsachse relativ zu der Schwinge dreht. Die drei Achsen, welche für eine Bewegung des Karussells, der Schwinge und des Armauslegers sorgen, werden auch als Hauptachsen bezeichnet. Weitere Antriebe dienen dazu, die an dem Armausleger aufgenommene Effektorhalterung und den an der Effektorhalterung aufgenommenen Endeffektor um weitere geometrische Achsen zu bewegen. Die zugehörigen Achsen werden in Unterscheidung zu den Hauptachsen als Handachsen bezeichnet. Die Positionierung der Effektorhalterung mit einem daran angeordneten Endeffektor im Raum erfolgt mittels des Karussells, der Schwinge und des Armauslegers und den zugehörigen Hauptachsen. Eine Bewegung der Effektorhalterung relativ zu dem Armausleger sowie eine Bewegung des Endeffektors oder Teile des Endeffektors relativ zur Effektorhalterung erfolgt mittels mindestens einer Handachse. Hierzu zählt beispielsweise eine Drehung der Effektorhalterung oder das Öffnen und Schließen eines als Greifer ausgebildeten Endeffektors. Da die Hauptachsen eine erste Achse, eine zweite Achse und eine dritte Achse umfassen, werden die Handachsen auch als vierte, fünfte und sechste Achse bezeichnet.

Industrieroboter mit serieller Kinematik werden auch als Knickarmroboter bezeichnet.

Industrieroboter, welche für eine hohe Traglast ausgelegt sind, werden beispielsweise zur Handhabung von Stückgütern mit großem Eigengewicht eingesetzt. Hierzu zählen zum Beispiel Verpackungs- oder Palettieranlagen zum Stapeln und Palettieren von Objekten wie Paketen oder Gebinden mit mehreren Artikeln. Je nach Anwendung kann die Traglast beispielsweise mehr als 100kg, mehr als 200kg oder sogar mehr als 800kg betragen. Kinematiken, die für eine entsprechend hohe Traglast ausgelegt sind, müssen eine hohe Stabilität aufweisen, was wiederum ein gewisses Eigengewicht zur Folge hat. Aufgrund des Eigengewichts der Kinematik und der hohen Traglast werden an den Industrieroboter hohe Anforderungen in Bezug auf die Stabilität gestellt. Die Kinematik muss auch bei ausladenden Endeffektoren und hohen Traglasten eine Kippsteifigkeit aufweisen. Darüber hinaus müssen die Prozesssicherheit und die Positioniergenauigkeit gewährleistet werden. Schwingungen sollen vermieden werden.

Der Erfindung liegt die Aufgabe zugrunde, einen Industrieroboter für große Traglasten zur Verfügung zu stellen, welcher eine hohe Kippsteifigkeit, eine hohe Prozesssicherheit und eine hohe Positioniergenauigkeit gewährleistet.

Diese Aufgabe wird durch den Industrieroboter mit den Merkmalen des Anspruchs 1 gelöst. Der Industrieroboter zeichnet sich dadurch aus, dass er mit einer Stützstruktur ausgestattet ist, welche die Schwinge von zwei Seiten unterstützt. Die Stützstruktur weist zwei der Schwinge zugeordnete Schwinge-Stützstangen mit fest vorgegebener Länge auf. Dabei ist jede der Schwinge-Stützstangen mit einem ersten Ende an dem Karussell drehbar aufgenommen und mit einem zweiten Ende mittelbar oder unmittelbar drehbar um die dritte geometrische Antriebsachse an der Kinematik aufgenommen. Durch diese drehbare Anordnung der Schwinge-Stützstangen können diese der Bewegung der Schwinge folgen und dabei gleichzeitig die Schwinge auf zwei Seiten abstützen. Ein seitliches Abkippen oder Ausbrechen der Schwinge wird dadurch ausgeschlossen. Die Stabilität der Kinematik wird signifikant verbessert. Die Steifigkeit der Kinematik wird erhöht, wodurch Schwingungen und Vibrationen stark reduziert werden. Dies führt zu einer hohen Positioniergenauigkeit und einer Steigerung der Effizienz. Die seitlich der Schwinge angeordneten Schwinge-Stützstangen beanspruchen wenig Platz, was eine kompakte Bauweise bei gleichzeitig großem Arbeitsbereich ermöglicht. Die Flexibilität und die Einsatzmöglichkeiten des Industrieroboters werden erweitert.

Bevorzugt sind beide Schwinge-Stützstangen um eine gemeinsame geometrische erste Schwinge-Stützstange-Drehachse an dem Karussell drehbar angeordnet und um eine gemeinsame geometrische zweite Schwinge-Stützstange-Drehachse relativ zur dritten geometrischen Antriebsachse angeordnet. Die Schwinge-Stützstangen können auch als Koppelstangen bezeichnet werden, da sie zusätzlich zu der Schwinge für eine Kopplung zwischen dem Karussell und der dritten geometrischen Antriebsachse sorgen. Dabei sind die Schwinge-Stützstangen nicht direkt an den zweiten Antrieb gekoppelt. Sie werden daher nicht aktiv angetrieben, sondern folgen lediglich der Bewegung der Schwinge, welche direkt an den zweiten Antrieb gekoppelt ist und von diesem angetrieben wird.

Vorteilhafterweise ist der Industrieroboter steuerungsunabhängig ausgeführt. Er umfasst die mechanischen Komponenten und die zugehörigen Antriebe und kann an seinem Einsatzort in ein beliebiges Steuerungskonzept eingebunden werden. Dies führt dazu, dass er mit beliebigen Automatisierungskonzepten kompatibel ist. Auf eine Integration einer proprietären Robotersteuerung des Industrieroboters in eine aus unterschiedlichen Komponenten bestehende Umgebung mit einer bereits vorhandenen Steuerung kann verzichtet werden, was die Integration erheblich vereinfacht.

Nach einer vorteilhaften Ausgestaltung der Erfindung sind die zwei Schwinge-Stützstangen parallel angeordnet und baugleich. Die abstützende Wirkung jeder der Schwinge-Stützstangen ist damit im wesentlichen identisch.

Nach einer weiteren vorteilhaften Ausgestaltung der Erfindung unterstützt die Stützstruktur die Schwinge und den Armausleger und weist zusätzlich zu den Schwinge-Stützstangen mindestens eine Armausleger-Stützstange fest vorgegebener Länge auf. Dabei ist die Armausleger-Stützstange mit einem ersten Ende zumindest mittelbar drehbar um die dritte geometrische Antriebsachse an der Kinematik aufgenommen. Mit einem zweiten Ende ist die Armausleger-Stützstange mittelbar oder unmittelbar an einem der Schwinge abgewandten Ende des Armauslegers drehbar aufgenommen.

Nach einer weiteren vorteilhaften Ausgestaltung der Erfindung unterstützt die Stützstruktur die Schwinge und den Armausleger von zwei Seiten und weist zwei dem Armausleger zugeordnete Armausleger-Stützstangen mit vorgegebener Länge auf.

Nach einer weiteren vorteilhaften Ausgestaltung der Erfindung sind die zwei Armausleger-Stützstangen parallel angeordnet und baugleich. Die abstützende Wirkung jeder der Schwinge-Stützstangen ist damit im wesentlichen identisch.

Nach einer weiteren vorteilhaften Ausgestaltung der Erfindung sind die Armausleger-Stützstangen durch einen Querverbinder miteinander verbunden. Der Querverbinder sorgt für eine zusätzliche Stabilisierung.

Nach einer weiteren vorteilhaften Ausgestaltung der Erfindung weist die Stützstruktur zwei die Schwinge-Stützstangen und die Armausleger-Stützstangen beweglich miteinander verbindende Drehmomentstützen auf, die an der Schwinge und/oder dem Armausleger um eine gemeinsame geometrische Drehmomentstützen-Achse drehbar angeordnet sind. Dabei sind an jeder Drehmomentstütze eine Schwinge-Stützstange mit ihrem zweiten Ende und eine Armausleger-Stützstange mit einem ersten Ende drehbar aufgenommen.

Nach einer weiteren vorteilhaften Ausgestaltung der Erfindung ist jede Drehmomentstütze als Hebel mit mindestens zwei Hebelarmen ausgebildet. Dabei ist der Hebel um die geometrische Drehmomentstützen-Achse drehbar. An einem ersten Hebelarm ist eine der Schwinge-Stützstangen drehbar aufgenommen, während an einem zweiten Hebelarm eine der Armausleger-Stützstangen drehbar aufgenommen ist.

Nach einer weiteren vorteilhaften Ausgestaltung der Erfindung fällt die geometrische Drehmomentstützen-Achse mit der dritten geometrischen Antriebsachse zusammen.

Nach einer weiteren vorteilhaften Ausgestaltung der Erfindung weist die Stützstruktur zwei die Armausleger-Stützstangen mit einem Endeffektorträger verbindende Endeffektorstützen auf, welche um eine gemeinsame geometrische Endeffektorstützen-Achse an dem der Schwinge abgewandten Ende des Armauslegers drehbar angeordnet sind. An jeder Endeffektorstütze ist eine Armausleger-Stützstange mit ihrem zweiten Ende drehbar aufgenommen. An dem Endeffektorträger kann ein Endeffektor angeordnet werden.

Nach einer weiteren vorteilhaften Ausgestaltung der Erfindung ist jede Endeffektorstütze als Hebel mit mindestens einem Hebelarm ausgebildet, der um die geometrische Endeffektorstützen-Achse drehbar ist. An dem Hebelarm der Endeffektor-Stütze ist eine der Armausleger-Stützstangen drehbar aufgenommen.

Nach einer weiteren vorteilhaften Ausgestaltung der Erfindung bilden eine erste Schwinge-Stützstange, eine erste Drehmomentstütze, eine erste Armausleger-Stützstange und eine erste Endeffektorstütze eine erste kinematische Kette. Ferner bilden eine zweite Schwinge-Stützstange, eine zweite Drehmomentstütze, eine zweite Armausleger-Stützstange und eine zweite Endeffektorstütze eine zweite kinematische Kette. Die Schwinge und der Armausleger sind räumlich in dem Zwischenraum angeordnet, der einerseits durch die erste kinematische Kette und andererseits durch die zweite kinematische Kette begrenzt ist. Dadurch sind die Schwinge und der Armausleger von beiden Seiten durch die Stützstruktur abgestützt. Auf diese Weise wird die Steifigkeit, insbesondere die Kippsteifigkeit der Kinematik zusätzlich erhöht.

Nach einer weiteren vorteilhaften Ausgestaltung der Erfindung sind die zweite geometrische Antriebsachse, die dritte geometrische Antriebsachse, die geometrische Drehmoment-Stützenachse, die geometrische Endeffektorstützen-Achse und die geometrischen Achsen, um die die Schwinge-Stützstangen und die Armausleger-Stützstangen drehbar sind, parallel.

Nach einer weiteren vorteilhaften Ausgestaltung der Erfindung spannen die geometrischen Verbindungen zwischen der geometrischen Drehmoment-Stützenachse, der geometrischen Endeffektorstützen-Achse und den geometrischen Achsen, um die die Armausleger-Stützstangen an den Drehmomentstützen und an den Endeffektorstützen drehbar aufgenommen sind, ein erstes geometrisches Parallelogramm auf.

Nach einer weiteren vorteilhaften Ausgestaltung der Erfindung spannen die geometrischen Verbindungen zwischen der zweiten geometrischen Antriebsachse, der geometrischen Drehmoment-Stützenachse und den geometrischen Achsen, um die die Schwinge-Stützstangen an dem Karussell und an den Drehmomentstützen drehbar aufgenommen sind, ein zweites geometrisches Parallelogramm auf. Dadurch dass die Stützstruktur ein erstes geometrisches Parallelogramm und ein zweites geometrisches Parallelogramm aufspannt, wird gewährleistet, dass ein an der Endeffektorstütze angeordneter Endeffektorträger stets parallel zur Roboterbasis ausgerichtet ist, unabhängig von der Stellung der Schwinge und des Armauslegers.

Nach einer weiteren vorteilhaften Ausgestaltung der Erfindung hat die Schwinge einen gekrümmten Verlauf.

Nach einer weiteren vorteilhaften Ausgestaltung der Erfindung hat der Armausleger einen gekrümmten Verlauf.

Nach einer weiteren vorteilhaften Ausgestaltung der Erfindung ist der zweite Antrieb, welcher die Schwinge um die zweite geometrische Antriebsachse relativ zu dem Karussell rotiert, an dem Karussell angeordnet. Der zweite Antrieb weist einen Motor und ein Winkelgetriebe auf, welches das Drehmoment einer Motorwelle des Motors des zweiten Antriebs um einen vorgegebenen Winkel α umlenkt. Dadurch wird die radiale Ausdehnung des zweiten Antriebs in Bezug auf die erste geometrische Antriebsachse reduziert. Es wird insbesondere vermieden, dass der zweite Antrieb in Richtung der zweiten geometrischen Antriebsachse seitlich von dem Karussell nach außen absteht und damit bei einer Rotation des Karussells um die erste geometrische Antriebsachse viel Platz beansprucht.

Nach einer weiteren vorteilhaften Ausgestaltung der Erfindung lenkt das Winkelgetriebe des zweiten Antriebs das Drehmoment der Motorwelle des Motors des zweiten Antriebs um den Winkel α mit 70° ≤ α ≤ 110° um, derart dass eine geometrische Motorwellenachse, um welche die Motorwelle des Motors des zweiten Antriebs zur Rotation angetrieben ist, mit der zweiten geometrischen Antriebsachse den Winkel α mit 70° ≤ α ≤ 110° einschließt.

Nach einer weiteren vorteilhaften Ausgestaltung der Erfindung schließt die geometrische Motorwellenachse des Motors des zweiten Antriebs mit der ersten geometrischen Antriebsachse einen Winkel β zwischen 10° und 70°, bevorzugt zwischen 20° und 60°, besonders bevorzugt zwischen 25° und 45° ein. Eine derartige Anordnung des Motors führt dazu, dass der Motor die Bewegung der Kinematik und die Umgebung der Kinematik nicht oder allenfalls in vernachlässigbarem Umfang beeinträchtigt.

Nach einer weiteren vorteilhaften Ausgestaltung der Erfindung ist der dritte Antrieb, welcher den Armausleger um die dritte geometrische Antriebsachse relativ zu der Schwinge rotiert, an dem Karussell angeordnet. Der dritte Antrieb weist einen Motor und ein Winkelgetriebe auf, welches das Drehmoment einer Motorwelle des Motors des dritten Antriebs um einen vorgegebenen Winkel γ umlenkt. Die Kinematik ist mit einer Treibstange ausgestattet, welche das Drehmoment des dritten Antriebs von dem Winkelgetriebe auf den Armausleger überträgt. Durch die Umlenkung des Drehmoments mit dem Winkelgetriebe wird die radiale Ausdehnung des dritten Antriebs in Bezug auf die erste geometrische Antriebsachse reduziert. Es wird insbesondere vermieden, dass der dritte Antrieb bezogen auf die erste geometrische Antriebsachse radial in Richtung der zweiten geometrischen Antriebsachse nach außen absteht und damit bei einer Rotation des Karussells um die erste geometrische Antriebsachse viel Platz beansprucht.

Nach einer weiteren vorteilhaften Ausgestaltung der Erfindung lenkt das Winkelgetriebe des dritten Antriebs das Drehmoment der Motorwelle des Motors des dritten Antriebs um den Winkel γ mit 70° ≤ γ ≤ 110° um, derart dass eine geometrische Motorwellenachse, um welche die Motorwelle des Motors des dritten Antriebs zur Rotation angetrieben ist, zu einer geometrischen Abtriebswellenachse des Winkelgetriebes des dritten Antriebs einen Winkel γ mit 70° ≤ γ ≤ 110° einschließt.

Nach einer weiteren vorteilhaften Ausgestaltung der Erfindung sind der zweite Antrieb und der dritte Antrieb jeweils seitlich derart an dem Karussell angeordnet, dass die geometrische Abtriebswellenachse des Winkelgetriebes des dritten Antriebs mit der zweiten geometrischen Antriebsachse zusammenfällt. Der zweite Antrieb und der dritte Antrieb sind damit symmetrisch an dem Karussell angeordnet. Ein vergrößerter Abstand zwischen dem zweiten Antrieb und dem dritten Antrieb sorgt für eine Erhöhung der Robustheit der Kinematik bei gleichzeitig kompakter Bauweise.

Nach einer weiteren vorteilhaften Ausgestaltung der Erfindung sind die geometrische Motorwellenachse des Motors des zweiten Antriebs und die geometrische Motorwellenachse des Motors des dritten Antriebs parallel zueinander.

Nach einer weiteren vorteilhaften Ausgestaltung der Erfindung kann der Endeffektor des Industrieroboters als Geifer ausgebildet sein. Dieser kann beispielsweise als Klemmgreifer oder Hakengreifer ausgebildet sein. Alternativ kann der Endeffektor auch als Beladeplatte ausgebildet sein.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung sind Ausführungsbeispiele des Erfindungsgegenstandes dargestellt. Es zeigen:
- Figur 1: Industrieroboter in Seitenansicht,
- Figur 2: Industrieroboter gemäß Figur 1 in einer perspektivischen Ansicht von hinten,
- Figur 3: Industrieroboter gemäß Figur 1 in perspektivischer Ansicht von der Seite,
- Figur 4: zweites Getriebe mit einem ersten Ausführungsbeispiel einer Schwingen-Halteeinrichtung in perspektivischer Ansicht,
- Figur 5: zweites Getriebe gemäß Figur 4 ohne Getriebe-Gehäuseteil,
- Figur 6: zweites Getriebe gemäß Figur 4 in einer Seitenansicht,
- Figur 7: zweites Getriebe gemäß Figur 4 in Schnittdarstellung, Schnitt entlang A-A in Figur 6,
- Figur 8: Ausschnitt Z aus Figur 7,
- Figur 9: zweites Ausführungsbeispiel einer Schwingen-Halteeinrichtung mit zurückgezogenem Schwingen-Blockiermittel,
- Figur 10: Schwingen-Halteeinrichtung gemäß Figur 9 vor dem Entfernen des zweiten Motors,
- Figur 11: Schwingen-Halteeinrichtung gemäß Figur 9 beim Entfernen des zweiten Motors,
- Figur 12: Schwingen-Halteeinrichtung gemäß Figur 9 in Arretierungszustand,
- Figur 13: schematische Darstellung der Stützstruktur des Industrieroboters gemäß Figuren 1 bis 3,
- Figur 14: zweites Ausführungsbeispiel einer Stützstruktur in schematischer Darstellung,
- Figur 15: drittes Ausführungsbeispiel einer Stützstruktur in schematischer Darstellung.

### Beschreibung der Ausführungsbeispiele

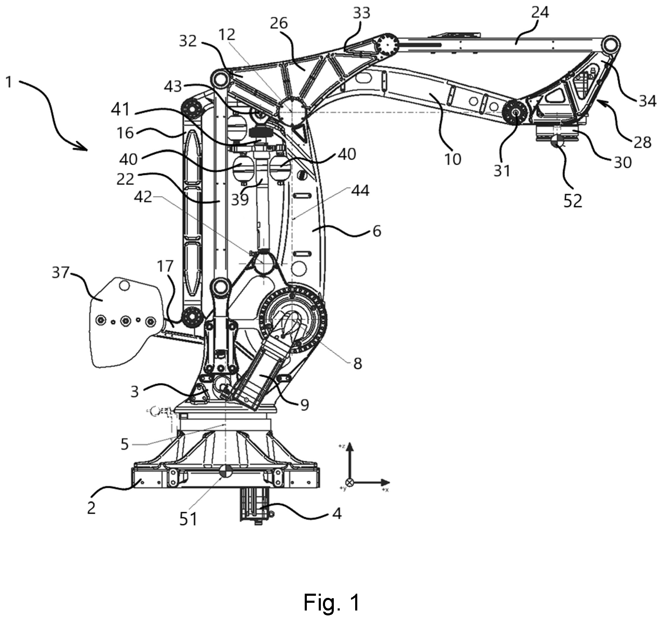

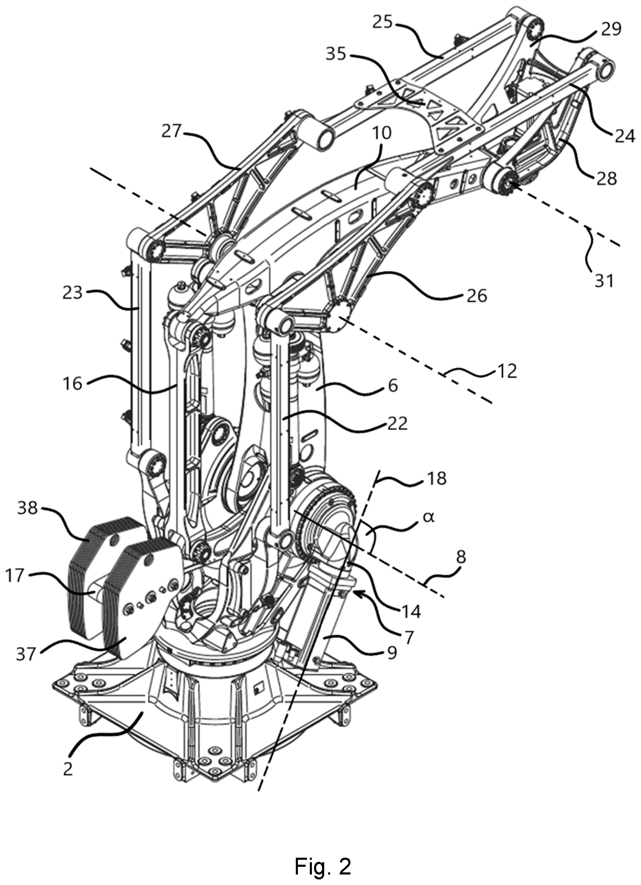

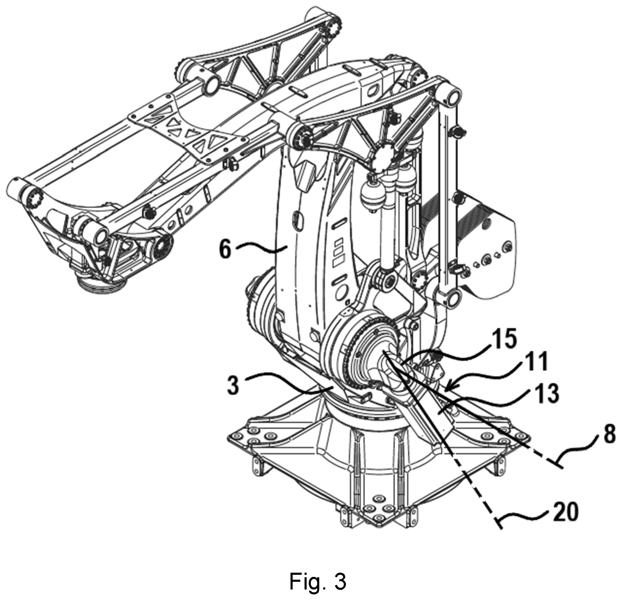

Die Figuren 1 bis 3 zeigen einen Industrieroboter 1 mit serieller Kinematik. Diese Kinematik ist an einer Roboterbasis 2 aufgenommen. Sie umfasst ein relativ zu der Roboterbasis 2 drehbares Karussell 3, eine an dem Karussell 3 drehbar aufgenommene Schwinge 6 und einen an der Schwinge drehbar aufgenommenen Armausleger 10. Die Schwinge 6 und der Armausleger 10 haben dabei einen gekrümmten Verlauf. Ein erster Antrieb 4 übt auf das Karussell 3 relativ zu der Roboterbasis 2 ein Drehmoment um eine erste geometrische Antriebsachse 5 aus. Ein zweiter Antrieb 7 übt auf die Schwinge 6 relativ zu dem Karussell 3 ein Drehmoment um eine zweite geometrische Antriebsachse 8 aus. Der zweite Antrieb 7 umfasst einen zweiten Motor 9 und ein zweites Getriebe 14. Ein dritter Antrieb 11 übt auf den Armausleger 10 relativ zu der Schwinge 6 ein Drehmoment um eine dritte geometrische Antriebsachse 12 aus. Der dritte Antrieb 11 umfasst einen dritten Motor 13 und ein drittes Getriebe 15. Der zweite Antrieb 7 und der dritte Antrieb 11 sind an dem Karussell 3 angeordnet. Während das Drehmoment des zweiten Antriebs 7 über das als Winkelgetriebe ausgebildete zweite Getriebe 14 direkt auf ein unteres Ende der Schwinge 6 übertragen wird, ist zur Übertragung des Drehmoments des dritten Antriebs 11 auf den Armausleger 10 eine Treibstange 16 vorgesehen, die über einen Hebel 17 mit dem ebenfalls als Winkelgetriebe ausgebildeten dritten Getriebe 15 verbunden ist. Ein oberes Ende der Treibstange 16 ist beweglich mit dem Armausleger 10 verbunden. Der Industrieroboter 1 ist derart aufgestellt, dass die erste geometrische Antriebsachse 5 vertikal verläuft. Die zweite geometrische Antriebsachse 8 und die dritte geometrische Antriebsachse 12 sind parallel zueinander. Sie verlaufen horizontal. Die Schwinge 6 ist derart an dem Karussell 3 aufgenommen, dass sich die erste geometrische Antriebsachse 5 und die zweite geometrische Antriebsachse 8 nicht schneiden. Unter Vernachlässigung des daraus resultierenden Abstands verlaufen die erste geometrischen Antriebsachse 5 und die zweite geometrische Antriebsachse 8 senkrecht zueinander.

Der kinematische Ursprung 51 des Industrieroboters 1 befindet sich an der Roboterbasis 2. An dem Armausleger 10 ist mittelbar ein Endeffektorträger 30 angeordnet. An diesem befindet sich der Tool Center Point 52.

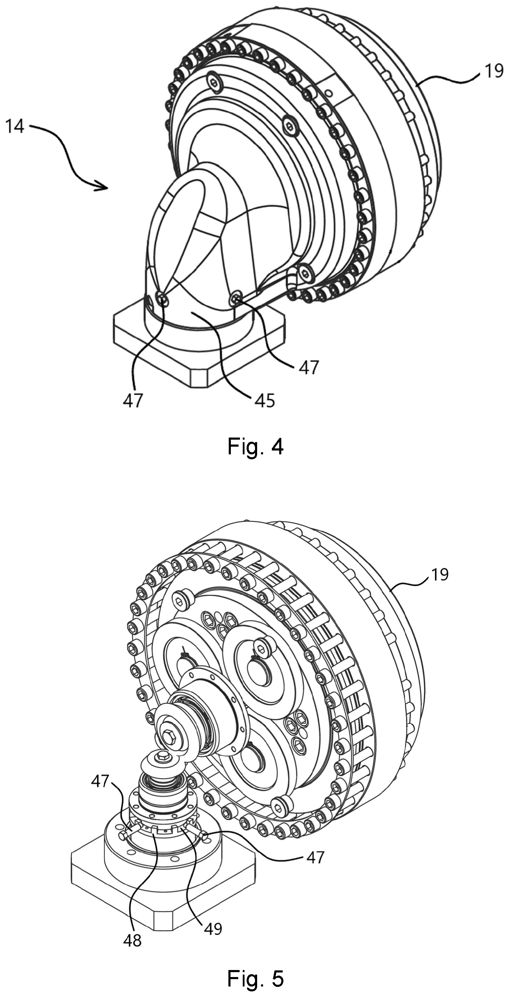

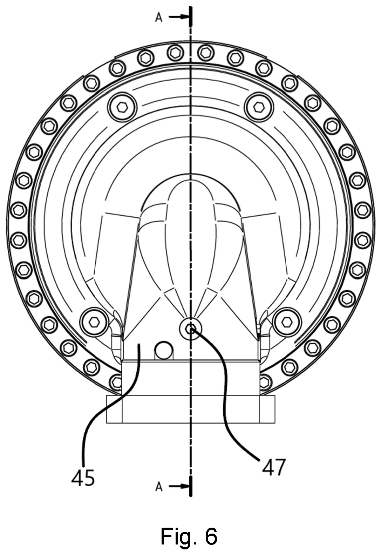

Die Figuren 4 bis 8 zeigen das zweite Getriebe 14. Der in den Figuren 4 bis 8 zur Vereinfachung nicht dargestellte zweite Motor 9 erzeugt ein Drehmoment um eine geometrische Motorwellenachse 18. Das als Winkelgetriebe ausgebildete zweite Getriebe 14 sorgt für eine Umlenkung dieses Drehmoments um einen Winkel α = 90°. Die geometrische Achse, um die die Abgangswelle des zweiten Getriebes 14 rotiert, stimmt mit der zweiten geometrischen Antriebsachse 8 überein. Die Abgangswelle des zweiten Getriebes entspricht der Schwingen-Antriebswelle 19 eines Schwingenantriebsstrangs. Mit der Schwingen-Antriebswelle 19 wird die Schwinge verbunden, welche in den Figuren 4 bis 8 nicht dargestellt ist.

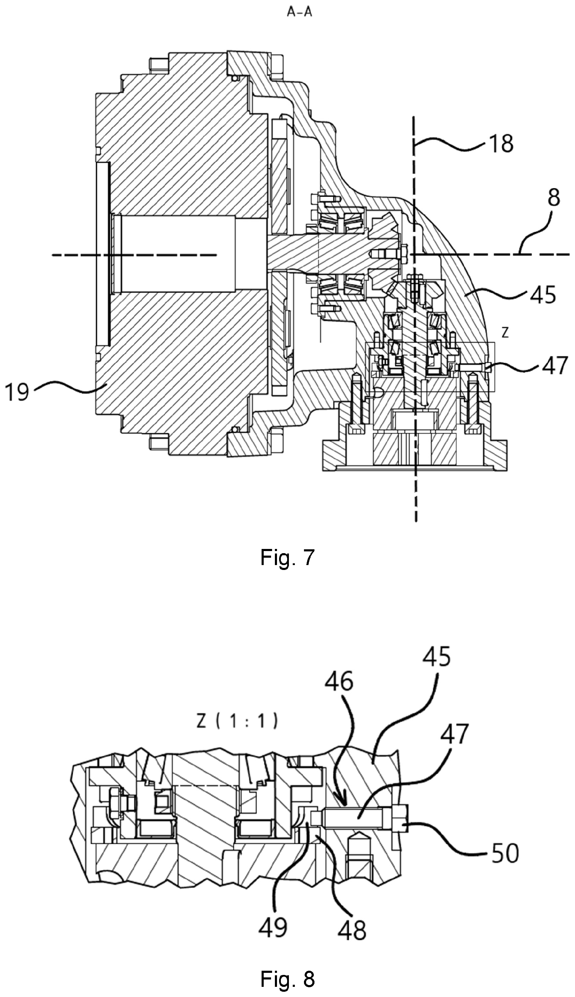

Das in den Figuren 4 bis 8 dargestellte zweite Getriebe 14 ist mit einer Schwingen-Halteeinrichtung ausgestattet. Diese umfasst das Getriebe-Gehäuseteil 45, welches mit zweiten Aufnahmen 46 ausgestattet und starr mit dem Karussell 3 verbunden ist, Schwingen-Blockiermittel 47, welche als Schrauben ausgebildet sind, und ein Schwingen-Blockierelement 48, welches Ausnehmungen 49 für die Schrauben aufweist und Teil eines Schwingen-Antriebsstrangs ist. Das Schwingen-Blockierelement 48 ist in dem Getriebe-Gehäuseteil 45 um die geometrische Motorwellenachse 18 drehbar aufgenommen. Es ist Teil des als Winkelgetriebe ausgebildeten zweiten Getriebes 14. Das Schwingen-Blockierelement 48 weist eine zylindrische Form auf. Die zweiten Aufnahmen 46 in dem Getriebe-Gehäuseteil 45 sind mit einem Innengewinde ausgestattet. Die Figuren 4 bis 8 zeigen mehrere Schwingen-Blockiermittel 47 in Form von Schrauben, die in die Aufnahmen 46 eingesetzt sind. Dabei steht ein Gewinde der Schrauben in Eingriff mit dem Innengewinde der jeweils zugehörigen Aufnahme 46. Figur 8 zeigt, dass die Schraube mit ihrem dem Schraubenkopf 50 abgewandten Ende in eine Ausnehmung 49 des Schwingen-Blockierelements 48 eingreift und dadurch das Schwingen-Blockierelement 48, welches Teil des Schwingen-Antriebsstrangs ist, mit dem Getriebe-Gehäuseteil 45, welches an dem Karussell befestigt ist, fest verbindet, so dass das Schwingen-Blockierelement 48 und damit auch die Schwingen-Antriebswelle 19 mit der daran angeordneten Schwinge relativ zu dem Karussell festgelegt und arretiert sind. Figur 5 zeigt, dass das Schwingen-Blockierelement 48 mehrere Ausnehmungen 49 für die Schwingen-Blockiermittel 47 aufweist. Figur 4 zeigt, dass das Getriebe-Gehäuseteil 45 mehrere Aufnahmen 46 aufweist. Dadurch können mehrere Schwingen-Blockiermittel 47 in Form von Schrauben zur Arretierung der Schwinge eingesetzt werden. Darüber hinaus kann die Schwinge in mehreren verschiedenen Schwingen-Haltestellungen arretiert werden. Die Schwingen-Halteeinrichtung befindet sich in den Figuren 4 bis 8 in ihrem Arretierungszustand. In diesem Arretierungszustand kann der in den Figuren 4 bis 8 nicht dargestellte zweite Motor von dem zweiten Getriebe 14 abgenommen werden, wobei die Schwinge durch die Schwingen-Halteeinrichtung in ihrer Ausrichtung gehalten wird.

Der dritte Motor 13 und das dritte Getriebe 15 sind ebenfalls seitlich an dem Karussell 3 angeordnet, wobei das dritte Getriebe 15 ein Drehmoment des dritten Motors 13 um einen Winkel α = 90° umlenkt. Eine geometrische Motorwellenachse 20 des dritten Motors schließt mit einer geometrischen Achse, um welche die Abgangswelle des dritten Getriebes 15 drehbar ist, den Winkel α ein. Die geometrische Achse, um die die Abgangswelle des dritten Getriebes 15 drehbar ist, fällt mit der zweiten geometrischen Antriebsachse 8 zusammen. Das dritte Getriebe 15 ist entsprechend zu dem zweiten Getriebe 14 ausgebildet und weist eine Armausleger-Halteeinrichtung auf, die mit der Schwingen-Halteeinrichtung gemäß den Figuren 4 bis 8 übereinstimmt.

Das als Winkelgetriebe ausgebildete zweite Getriebe 14 und das als Winkelgetriebe ausgebildete dritte Getriebe 15 sorgen dafür, dass die geometrischen Motorwellenachsen 18, 20 nicht entlang der zweiten geometrischen Antriebsachse 8 oder parallel zu dieser verlaufen und dass damit der zweite Motor 9 und der dritte Motor 13 nicht entlang der zweiten geometrischen Antriebsachse 8 radial nach außen von dem Karussell 3 abstehen. Stattdessen liegen die Motoren 9, 13 seitlich an dem Karussell 3 an. Der Industrieroboter beansprucht damit in Richtung der zweiten geometrischen Antriebsachse 8 weniger Platz. Dies sorgt bei einer Rotation des Karussells 3 um die erste geometrische Antriebsachse 5 für weniger Störung der Umgebung des Industrieroboters 1. Darüber hinaus schließt die geometrische Motorwellenachse 18 des zweiten Motors 9 des zweiten Antriebs 7 mit der ersten geometrischen Antriebsachse 5 einen Winkel β von 30° ein. Der zweite Motor 9 ist damit mit seiner Motorwellenachse 18 weder vertikal noch horizontal ausgerichtet. Die unter einem Winkel gegen die erste geometrische Antriebsachse ausgerichtete Anordnung des zweiten Motors 9 sorgt zusätzlich dafür, dass der Motor weder die Kinematik noch die Umgebung des Industrieroboters behindert. Entsprechendes gilt den dritten Motor 13 und die zugehörigen geometrische Motorwellenachse 20. Sie verläuft ebenfalls unter einem Winkel β von 30° gegen die erste geometrische Antriebsachse 5. Die geometrische Motorwellenachse 20 des dritten Motors 13 ist zu der geometrischen Motorwellenachse 18 des zweiten Motors 9 parallel.

Der Industrieroboter 1 weist eine Stützstruktur auf, welche zwei der Schwinge 6 zugeordnete Schwinge-Stützstangen 22, 23, zwei dem Armausleger 10 zugeordnete Armausleger-Stützstangen 24, 25, zwei die Schwinge-Stützstangen 22, 23 und die Armausleger-Stützstangen 24, 25 beweglich miteinander verbindende Drehmomentstützen 26, 27 und zwei die Armausleger-Stützstangen 24, 25 mit dem Endeffektorträger 30 verbindende Endeffektorstützen 28, 29 umfasst. Die Schwinge-Stützstangen 22, 23 sind mit einem ersten Ende drehbar an dem Karussell 3 und mit ihrem zweiten Ende drehbar an jeweils einer Drehmomentstütze 26, 27 aufgenommen. Die Drehmomentstützen 26, 27 sind relativ zu der Schwinge 6 um die dritte geometrische Antriebsachse 12 drehbar angeordnet. Die Endeffektorstützen 28, 29 sind um eine geometrische Endeffektorstützen-Achse 31 drehbar an dem Armausleger 10 aufgenommen. Die Endeffektorstützen-Achse 31 ist dabei parallel zu der dritten geometrischen Antriebsachse 12. Der Endeffektorträger 30 ist darüber hinaus an den zwei Endeffektorstützen 28, 29 beweglich aufgenommen. An ihm kann ein in der Zeichnung nicht dargestellter Endeffektor angeordnet werden. Die geometrischen Achsen, um die die Schwinge-Stützstangen 22, 23 und die Armausleger-Stützstangen 24, 25 drehbar an der Kinematik aufgenommen sind, sind dabei parallel zu der zweiten geometrischen Antriebsachse 8 und der dritten geometrischen Antriebsachse 12. Dabei spannen die kürzesten geometrischen Verbindungen zwischen der dritten geometrischen Antriebsachse 12, der geometrischen Endeffektorstützen-Achse 31 und den geometrischen Achsen, um die die Armausleger-Stützstangen 24, 25 an den Drehmomentstützen 26, 27 und an den Endeffektorstützen 28, 29 drehbar aufgenommen sind, ein erstes geometrisches Parallelogramm auf. Ferner spannen die geometrischen Verbindungen zwischen der zweiten geometrischen Antriebsachse 8, der dritten geometrischen Antriebsachse 12 und den geometrischen Achsen, um die die Schwinge-Stützstangen 22, 23 an dem Karussell 3 und an den Drehmomentstützen 26, 27 drehbar aufgenommen sind, ein zweites geometrisches Parallelogramm auf.

Die Schwinge-Stützstangen 22, 23, die Armausleger-Stützstangen 24, 25, die Drehmomentstützen 26, 27 und die Endeffektorstützen 28, 29 bilden zwei kinematische Ketten:
eine erste Schwinge-Stützstange 22, eine erste Drehmomentstütze 26, eine erste Armausleger-Stützstange 24 und eine erste Endeffektorstütze 28 bilden eine erste kinematische Kette zwischen dem Karussell 3 und dem Endeffektorträger 30,
eine zweite Schwinge-Stützstange 23, eine zweite Drehmomentstütze 27, eine zweite Armausleger-Stützstange 25 und eine zweite Endeffektorstütze 29 bilden eine zweite kinematische Kette zwischen dem Karussell 3 und dem Endeffektorträger 30.
Die Schwinge-Stützstangen 22, 23 die Armausleger-Stützstangen 24, 25, die Drehmomentstützen 26, 27 und die Endeffektorstützen 28, 29 sind dabei derart an dem Industrieroboter angeordnet, dass sich die Schwinge 6 und der Armausleger 10 in dem Zwischenraum befinden, der durch die erste kinematische Kette und die zweite kinematische Kette begrenzt wird.

Die Stützstruktur stützt damit die Schwinge 6 und den Armausleger 10 seitlich ab, wodurch die Eigenstabilität und die Steifheit der Kinematik erhöht werden. Die Gefahr von Schwingungen und Vibrationen wird reduziert, was für eine hohe Präzision bei der Positionierung eines an dem Endeffektorträger angeordneten Endeffektors und einer zusätzlichen Traglast führt. Trotz einer kompakten Bauweise des Industrieroboters und einer hohen Traglast weist der Industrieroboter einen großen Arbeitsbereich auf.

Jede der Drehmomentstützen 26, 27 wirkt in Bezug auf die dritte geometrische Antriebsachse 12 wie ein zweiarmiger Hebel. An einem ersten Hebelarm 32 der ersten Drehmomentstütze 26 ist das zweite Ende der ersten Schwinge-Stützstange 22 drehbar aufgenommen. An einem zweiten Hebelarm 33 der ersten Drehmomentstütze 26 ist ein erstes Ende der ersten Armausleger-Stützstange 24 drehbar ausgenommen. Entsprechendes gilt für die zweite Drehmomentstütze 27: an einem ersten Hebelarm 32 der zweiten Drehmomentstütze 27 ist das zweite Ende der zweiten Schwinge-Stützstange 23 drehbar aufgenommen, während an einem zweiten Hebelarm 33 der zweiten Drehmomentstütze 27 ein erstes Ende der zweiten Armausleger-Stützstange 25 drehbar aufgenommen ist.

Jede der Endeffektorstützen 28, 29 wirkt als einarmiger Hebel in Bezug auf die geometrische Endeffektorstützen-Achse: an einem Hebelarm 34 der ersten Endeffektorstütze 28 ist die erste Armausleger-Stützstange 24 mit einem zweiten Ende aufgenommen. Entsprechend ist an einem Hebelarm 34 der zweiten Endeffektorstütze 29 die zweite Armausleger-Stützstange 25 mit einem zweiten Ende aufgenommen.

Die erste Schwinge-Stützstange 22 und die zweite Schwinge-Stützstange 23 sind parallel zueinander. Ebenso sind die erste Armausleger-Stützstange 24 und die zweite Armausleger-Stützstange 25 parallel zueinander. Sie sind ferner durch ein Querverbinder 35 abgestützt.

Die Stützstruktur ist damit in der Lage, der Bewegung der Schwinge 6 und des Armauslegers 10 zu folgen, wobei die Bewegung durch den zweiten Antrieb 7 und den dritten Antrieb 11 ausgelöst wird. Die Stützstruktur ist dabei passiv. Sie wird nicht durch einen zusätzlichen Antrieb unterstützt. Die Stützstruktur sorgt dafür, dass der Endeffektorträger 30 stets parallel zu einer durch die Roboterbasis aufgespannten Ebene ist. Bevorzugt verläuft diese Ebene horizontal.

Der Industrieroboter 1 ist mit physischen Gewichten 36 in Scheibenform ausgestattet, welche zu einem ersten Stapel 37 und einem zweiten Stapel 38 zusammengefasst sind. Dabei sind die Stapel 37, 38 symmetrisch zur Treibstange 16 an dem Hebel 17 aufgenommen. Die Befestigung der Gewichte 36 in Scheibenform an dem Hebel 17 erfolgt mittels einer Schraubverbindung. Die Gewichte 36 stehen damit in die dem Armausleger 10 abgewandte Richtung von dem Karussell 3 ab und behindern daher die Bewegung eines an dem Endeffektorträger 30 angeordneten Endeffektors nicht. Die Stapel 37 und 38 der Gewichte 36 bilden ein Gegengewicht zu dem Armausleger 10. Sie werden bei Bedarf manuell an der Kinematik angeordnet oder von dieser entfernt, je nachdem, welche Traglast mit dem Industrieroboter 1 bewegt werden soll.

Darüber hinaus ist der Industrieroboter mit einer Gewichtsausgleichseinrichtung ausgestattet, welche zwei Zylinder 39 umfasst. In jedem Zylinder 39 ist ein Kolben verschiebbar aufgenommen, welcher in der Zeichnung nicht erkennbar ist. Der Kolben ist mit einer Kolbenstange 41 ausgestattet. Jeder Zylinder 39 ist über ein erstes Lager 42 drehbar mit dem Karussell 3 verbunden. Dabei ist das erste Lager 42 abseits einer geometrischen Verbindung 44 zwischen der zweiten geometrischen Antriebsachse 8 und der dritten geometrischen Antriebsachse 12 angeordnet. Jede Kolbenstange 41 ist über ein zweites Lager 43 zumindest mittelbar drehbar mit der Schwinge 6 verbunden. Jeder Zylinder 39 ist mit mehreren Druckspeichern 40 gekoppelt. Jeder Druckspeicher weist eine nicht dargestellte Membran auf, die das Volumen des Druckspeichers in ein erstes Teilvolumen und ein zweites Teilvolumen unterteilt. Das erste Teilvolumen ist mit Hydraulikflüssigkeit gefüllt und über eine nicht dargestellte Leitung mit dem Zylinder 39 verbunden. Das zweite Teilvolumen ist mit einem Gas gefüllt. Durch Erhöhung des Gasdrucks in dem zweiten Teilvolumen vergrößert sich dieses und drückt dadurch Hydraulikflüssigkeit über die Leitung in den zugehörigen Zylinder 39. Eine in der Zeichnung nicht dargestellte Steuereinrichtung steuert die Gewichtsausgleichseinrichtung in Abhängigkeit von der Gewichtskraft einer an dem Endeffektor angeordneten Traglast. Diese Traglast ist in der Zeichnung nicht dargestellt. Zur Steuerung der durch die Gewichtsausgleicheinrichtung ausgeübten Gegenkraft stellt die Steuereinrichtung ein, welche und wie viele der Druckspeicher 40 mit den Zylindern 39 derart aktiv wirkverbunden sind, dass Hydraulikflüssigkeit von dem Druckspeicher und den Druckspeichern in den Zylinder geleitet wird. Darüber hinaus stellt die Steuereinrichtung über ein nicht dargestelltes Proportionalventil ein, welches Volumen einer Hydraulikflüssigkeit zur Bewegung des Kolbens im jeweiligen Zylinder 39 zur Verfügung steht.

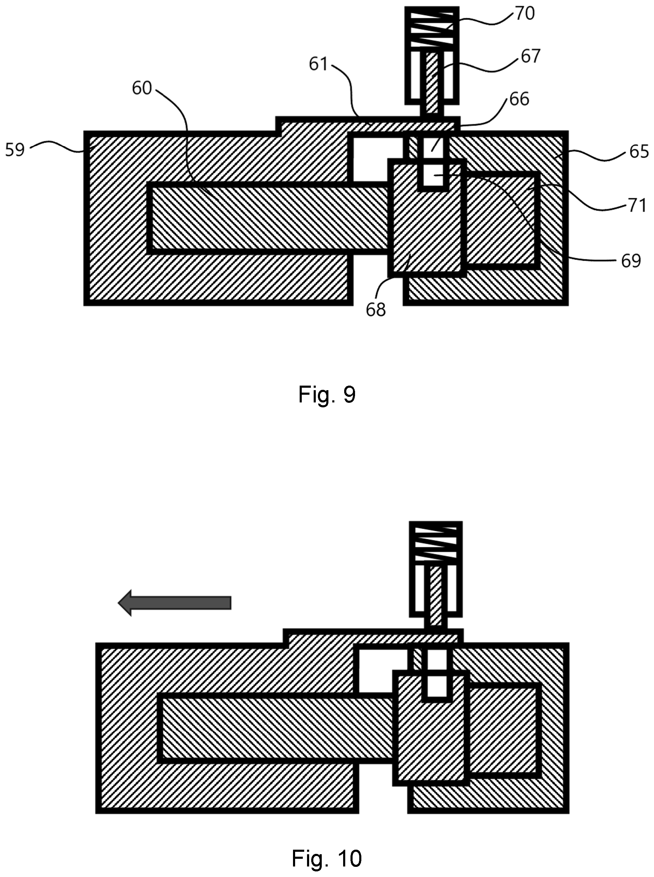

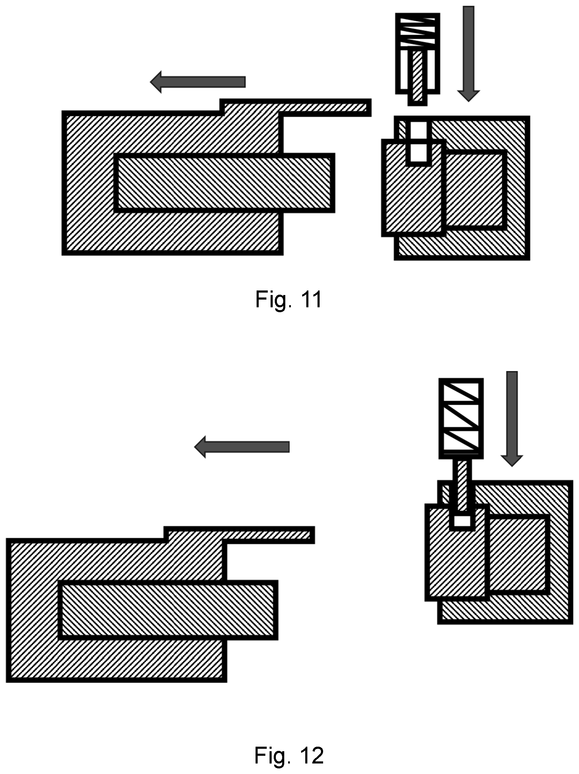

In den Figuren 9 bis 12 ist ein zweites Ausführungsbeispiel einer Schwingen-Halteeinrichtung dargestellt. Diese Schwingen-Halteeinrichtung ist eine alternative Ausführungsform der in den Figuren 4 bis 8 dargestellten Schwingen-Halteeinrichtung. Sie sorgt dafür, dass die Schwinge in einer Schwingen-Halterstellung gehalten und arretiert wird, wenn der Industrieroboter gewartet, repariert oder transportiert werden soll. Die Schwingen-Halteeinrichtung gemäß Figuren 9 bis 12 umfasst ein Getriebe-Gehäuseteil 65, an welchem eine Schwingen-Antriebswelle 71 des zweiten Getriebes drehbar aufgenommen ist, eine zweite Aufnahme 66 an dem Getriebe-Gehäuseteil 65, ein Schwingen-Blockiermittel 67 in Form eines Bolzens, ein Schwingen-Blockierelement 68, welches als Nabe ausgebildet und mit einer Ausnehmung 69 ausgestattet ist, eine Feder 70 sowie ein Halteteil 61, welches an einem zweiten Motor 59 befestigt ist. Das Getriebe-Gehäuseteil 65 ist an dem Karussell befestigt, welches in den Figuren 9 bis 12 nicht dargestellt ist. Das Schwingen-Blockiermittel 67 in Form eines Bolzens und die Feder 70 sind entweder an dem Getriebe-Gehäuseteil 65 oder an dem Karussell aufgenommen. Die Schwingen-Antriebswelle 71 ist Teil des Schwingenantriebsstrangs, welcher das Drehmoment des zweiten Motors 59 auf die in Figur 9 bis 12 nicht dargestellte Schwinge überträgt. Das als Nabe ausgebildete Schwingen-Blockierelement 68 ist drehfest und nicht lösbar mit der Schwingen-Antriebswelle 71 verbunden. In Figur 9 ist der zweite Motor 59 an dem Getriebegehäuseteil 65 angeordnet. Eine Motorwelle 60 des zweiten Motors 59 ist drehfest mit der Nabe verbunden und überträgt ihr Drehmoment auf diese. Der als Schwingen-Blockiermittel 67 dienende Bolzen ist zurückgezogen und befindet sich außerhalb der zweiten Aufnahme 66 des Getriebe-Gehäuseteils 65 sowie außerhalb der Ausnehmung 69 des als Nabe ausgebildeten Schwingen-Blockierelements 68. In dieser Stellung wird das Schwingen-Blockiermittel 67 durch das Halteteil 61 gehalten. Das Halteteil 61 drückt dabei das Schwingen-Blockiermittel 67 gegen die Feder 70, die dadurch gestaucht wird. Dadurch ist das Schwingen-Blockiermittel 67 unter Vorspannung aufgenommen. Die Figuren 10 und 11 zeigen, dass der zweite Motor 59 mit der Motorwelle 60 und dem Halteteil 61 von dem Getriebe-Gehäuseteil 65 entfernt wird. Dabei gibt das Halteteil 61 das Schwingen-Blockiermittel 67 frei. Die gestauchte Feder 70 entspannt sich und drückt dadurch das Schwingen-Blockiermittel 67 in die zweite Aufnahme 66 des Getriebe-Gehäuseteils 65 und in die Ausnehmung 69 des Schwingen-Blockierelements 68. Die mit dem Schwingen-Blockierelement 68 drehfest verbundene Schwingen-Antriebswelle 71 wird dadurch in ihrer Position gehalten und kann sich daher nicht drehen. Entsprechend verbleibt die in den Figuren 9 bis 12 nicht dargestellte Schwinge, welche an die Schwingen-Antriebswelle 71 gekoppelt ist, in ihrer Schwingen-Haltestellung. Die Schwingen-Halteeinrichtung befindet sich nun in ihrem Arretierungszustand. Dies ist Figur 12 dargestellt. Die Armausleger-Haltereinrichtung kann entsprechend ausgebildet sein.

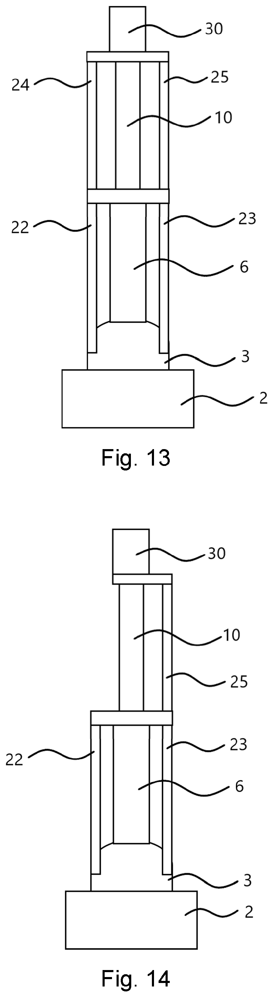

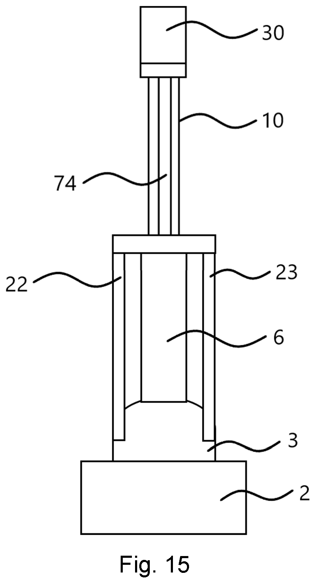

In den Figuren 13, 14 und 15 sind verschiedene Ausführungsbeispiele einer Stützstruktur der Kinematik schematisch dargestellt. Der Industrieroboter umfasst ein an einer Roboterbasis 2 aufgenommenes Karussell 3, eine Schwinge 6, einen Armausleger 10 und einen Endeffektorträger 30. Figur 13 zeigt vereinfacht das Ausführungsbeispiel gemäß den Figuren 1 bis 3: Die Stützstruktur weist zwei Schwinge-Stützstangen 22, 23 und zwei Armausleger-Stützstangen 24, 25 derart auf, dass sich die Schwinge 6 und der Armausleger 10 in einem Zwischenraum befinden, der durch die Schwinge-Stützstangen 22, 23 und durch die Armausleger-Stützstangen 24, 25 aufgespannt wird. Zur Vereinfachung sind die Drehmomentstützen und die Endeffektorstützen nicht dargestellt. Das in Figur 14 dargestellte zweite Ausführungsbeispiel unterscheidet sich von dem ersten Ausführungsbeispiel dadurch, dass der Armausleger 10 nur mit einer Armausleger-Stützstange 25 ausgestattet ist. Diese ist seitlich neben dem Armausleger angeordnet. Der Armausleger wird damit nur auf einer Seite von der Armausleger-Stützstange 25 unterstützt. Bei dem dritten Ausführungsbeispiel gemäß Figur 15 ist ebenfalls nur eine einzige Armausleger-Stützstange 74 vorgesehen. Im Unterschied zu dem in Figur 14 dargestellten Ausführungsbeispiel ist die Armausleger-Stützstange 74 jedoch nicht seitlich neben dem Armausleger 10 angeordnet, sondern zentral oberhalb des Armauslegers 10.

Sämtliche Merkmale der Erfindung können sowohl einzeln als auch in beliebiger Kombination miteinander erfindungswesentlich sein.

### Bezugszahlen

- 1: Industrieroboter
- 2: Roboterbasis
- 3: Karussell
- 4: Erster Antrieb
- 5: Erste geometrische Antriebsachse
- 6: Schwinge
- 7: Zweiter Antrieb
- 8: Zweite geometrische Antriebsachse
- 9: Zweiter Motor
- 10: Armausleger
- 11: Dritter Antrieb
- 12: Dritte geometrische Antriebsachse
- 13: Dritter Motor
- 14: Zweites Getriebe
- 15: Drittes Getriebe
- 16: Treibstange
- 17: Hebel
- 18: Geometrische Motorwellenachse des zweiten Motors
- 19: Schwingen-Antriebswelle
- 20: Geometrische Motorwellenachse des dritten Motors
- 22: Schwinge-Stützstange
- 23: Schwinge-Stützstange
- 24: Armausleger-Stützstange
- 25: Armausleger-Stützstange
- 26: Drehmomentstütze
- 27: Drehmomentstütze
- 28: Endeffektorstütze
- 29: Endeffektorstütze
- 30: Endeffektorträger
- 31: Geometrische Endeffektorstützen-Achse
- 32: Erster Hebelarm der Drehmomentstütze
- 33: Zweiter Hebelarm der Drehmomentstütze
- 34: Hebelarm der Endeffektorstütze
- 35: Querverbinder
- 36: Gewicht in Scheibenform
- 37: Erster Stapel
- 38: Zweiter Stapel
- 39: Zylinder
- 40: Druckspeicher
- 41: Kolbenstange
- 42: Erstes Lager
- 43: Zweites Lager
- 44: Geometrische Verbindung
- 45: Getriebe-Gehäuseteil
- 46: Zweite Aufnahme
- 47: Schwingen-Blockiermittel
- 48: Schwingen-Blockierelement
- 49: Ausnehmung
- 50: Schraubenkopf
- 51: Kinematischer Ursprung
- 52: Tool Center Point
- 59: zweiter Motor
- 60: Motorwelle
- 61: Halteteil
- 65: Getriebe-Gehäuseteil
- 66: zweite Aufnahme
- 67: Schwingen-Blockiermittel
- 68: Schwingen-Blockierelement
- 69: Ausnehmung
- 70: Feder
- 71: Schwingen-Antriebswelle
- 74: Armausleger-Stützstange

## Patentansprüche

1. Industrieroboter (1)
mit einer seriellen Kinematik, welche für eine große Traglast ausgebildet ist,
mit einem Karussell (3), welches ausgebildet ist, an einer Roboterbasis (2) um eine erste geometrische Achse (5) drehbar aufgenommen zu sein, mit einem ersten Antrieb (4), der das Karussell (3) um die erste geometrische Antriebsachse (5) dreht,
mit einer an dem Karussell (3) drehbar aufgenommenen Schwinge (6), mit einem zweiten Antrieb (7), der die Schwinge (6) um eine zweite geometrische Antriebsachse (8) relativ zu dem Karussell (3) dreht,
mit einem an der Schwinge (6) drehbar aufgenommenen Armausleger (10),
mit einem dritten Antrieb (11), der den Armausleger (10) um eine dritte geometrische Antriebsachse (12) relativ zu der Schwinge (6) dreht,
mit einer Stützstruktur, welche die Schwinge (6) von zwei Seiten unterstützt, wobei die Stützstruktur aufweist:
zwei der Schwinge (6) zugeordnete Schwinge-Stützstangen (22, 23) mit fest vorgegebener Länge, wobei jede der Schwinge-Stützstangen (22, 23) mit einem ersten Ende an dem Karussell (3) drehbar aufgenommen ist und mit einem zweiten Ende mittelbar oder unmittelbar drehbar um die dritte geometrische Antriebsachse (12) an der Kinematik aufgenommen ist.

2. Industrieroboter nach einem der vorhergehenden Ansprüche, **dadurch gekennzeichnet, dass** die zwei Schwinge-Stützstangen (22, 23) parallel angeordnet und baugleich sind.

3. Industrieroboter nach Anspruch 1 oder 2, **dadurch gekennzeichnet, dass** die Stützstruktur die Schwinge (6) und den Armausleger (10) unterstützt und mindestens eine Armausleger-Stützstange (24, 25) fest vorgegebener Länge aufweist, dass die Armausleger-Stützstange (24, 25) mit einem ersten Ende zumindest mittelbar drehbar um die dritte geometrische Antriebsachse (12) an der Kinematik aufgenommen ist, und dass die Armausleger-Stützstange (24, 25) mit einem zweiten Ende mittelbar oder unmittelbar an einem der Schwinge (6) abgewandten Ende des Armauslegers (10) drehbar aufgenommen ist.

4. Industriebroboter nach Anspruch 3, **dadurch gekennzeichnet, dass** die Stützstruktur die Schwinge (6) und den Armausleger (10) von zwei Seiten unterstützt und zwei dem Armausleger (10) zugeordnete Armausleger-Stützstangen (24, 25) mit vorgegebener Länge aufweist.

5. Industrieroboter nach Anspruch 4, **dadurch gekennzeichnet, dass** die zwei Armausleger-Stützstangen (24, 25) parallel angeordnet und baugleich sind.

6. Industrieroboter nach Anspruch 4 oder 5, **dadurch gekennzeichnet, dass** die Armausleger-Stützstangen (24, 25) durch einen Querverbinder (35) miteinander verbunden sind,

7. Industrieroboter nach Anspruch 3, 4 oder 5, **dadurch gekennzeichnet, dass** die Stützstruktur zwei die Schwinge-Stützstangen und die Armausleger-Stützstangen beweglich miteinander verbindende Drehmomentstützen (26, 27) aufweist, die an der Schwinge (6) und/oder dem Armausleger (10) um eine gemeinsame geometrische Drehmomentstützen-Achse drehbar angeordnet sind, wobei an jeder Drehmomentstütze (26, 27) eine Schwinge-Stützstange (22, 23) mit ihrem zweiten Ende und eine Armausleger-Stützstange (24, 25) mit einem ersten Ende drehbar aufgenommen sind.

8. Industrieroboter nach Anspruch 7, **dadurch gekennzeichnet, dass** jede Drehmomentstütze (26, 27) als Hebel mit mindestens zwei Hebelarmen (32, 33) ausgebildet ist, wobei der Hebel um die geometrische Drehmomentstützen-Achse drehbar ist, dass an einem ersten Hebelarm (32) eine der Schwinge-Stützstangen (22, 23) drehbar aufgenommen ist, und dass an einem zweiten Hebelarm (33) eine der Armausleger-Stützstangen (24, 25) drehbar aufgenommen ist.

9. Industrieroboter nach Anspruch 7 oder 8, **dadurch gekennzeichnet, dass** die geometrische Drehmomentstützen-Achse mit der dritten geometrischen Antriebsachse (12) zusammenfällt.

10. Industrieroboter nach einem der Ansprüche 4 bis 9, **dadurch gekennzeichnet, dass** die Stützstruktur zwei die Armausleger-Stützstangen (24, 25) mit einem Endeffektorträger (30) verbindende Endeffektorstützen (28, 29) aufweist, welche um eine gemeinsame geometrische Endeffektorstützen-Achse (31) an dem der Schwinge (6) abgewandten Ende des Armauslegers (10) drehbar angeordnet sind, wobei an jeder Endeffektorstütze (28, 29) eine Armausleger-Stützstange (24, 25) mit ihrem zweiten Ende drehbar aufgenommen ist.

11. Industrieroboter nach Anspruch 10, **dadurch gekennzeichnet, dass** jede Endeffektorstütze (28, 29) als Hebel mit mindestens einem Hebelarm (34) ausgebildet ist, wobei der Hebel um die geometrische Endeffektorstützen-Achse (31) drehbar ist, und dass an dem Hebelarm (34) der Endeffektorstütze (28, 29) eine der Armausleger-Stützstangen (24, 25) drehbar aufgenommen ist.

12. Industrieroboter nach Anspruch 10 oder 11 soweit diese auf Anspruch 7 rückbezogen sind, **dadurch gekennzeichnet, dass**
eine erste Schwinge-Stützstange (22), eine erste Drehmomentstütze (26), eine erste Armausleger-Stützstange (24) und eine erste Endeffektorstütze (28) eine erste kinematische Kette bilden,
dass eine zweite Schwinge-Stützstange (23), eine zweite Drehmomentstütze (27), eine zweite Armausleger-Stützstange (25) und eine zweite Endeffektorstütze (29) eine zweite kinematische Kette bilden, und
dass die Schwinge (6) und der Armausleger (10) räumlich in dem Zwischenraum angeordnet sind, der einerseits durch die erste kinematische Kette und andererseits durch die zweite kinematische Kette begrenzt ist.

13. Industrieroboter nach Anspruch 12, **dadurch gekennzeichnet, dass** die zweite geometrische Antriebsachse (8), die dritte geometrische Antriebsachse (12), die geometrische Drehmoment-Stützenachse, die geometrische Endeffektorstützen-Achse (31) und die geometrischen Achsen, um die die Schwinge-Stützstangen (22, 23) und die Armausleger-Stützstangen (24, 25) drehbar sind, parallel sind.

14. Industrieroboter nach Anspruch 13, **dadurch gekennzeichnet, dass** die kürzesten geometrischen Verbindungen zwischen der geometrischen Drehmoment-Stützenachse, der geometrischen Endeffektorstützen-Achse (31) und den geometrischen Achsen, um die die Armausleger-Stützstangen (24, 25) an den Drehmomentstützen (26, 27) und an den Endeffektorstützen (28, 29) drehbar aufgenommen sind, ein geometrisches Parallelogramm aufspannen.

15. Industrieroboter nach Anspruch 13 oder 14, **dadurch gekennzeichnet, dass** die kürzesten geometrischen Verbindungen zwischen der zweiten geometrischen Antriebsachse (8), der geometrischen Drehmoment-Stützenachse und den geometrischen Achsen, um die die Schwinge-Stützstangen (22, 23) an dem Karussell (3) und an den Drehmomentstützen (26, 27) drehbar aufgenommen sind, ein geometrisches Parallelogramm aufspannen.

16. Industrieroboter nach einem der vorhergehenden Ansprüche, **dadurch gekennzeichnet, dass** die Schwinge (6) einen gekrümmten Verlauf aufweist.

17. Industrieroboter nach einem der vorhergehenden Ansprüche, **dadurch gekennzeichnet, dass** der Armausleger (10) einen gekrümmten Verlauf aufweist.

18. Industrieroboter nach einem der vorhergehenden Ansprüche, **dadurch gekennzeichnet, dass** der zweite Antrieb (7), welcher die Schwinge (6) um die zweite geometrische Antriebsachse (8) relativ zu dem Karussell (3) rotiert, an dem Karussell (3) angeordnet ist, dass der zweite Antrieb (7) einen Motor (9) und ein Winkelgetriebe (14) aufweist, welches das Drehmoment einer Motorwelle des Motors (9) des zweiten Antriebs (7) um einen vorgegebenen Winkel α umlenkt.

19. Industrieroboter nach Anspruch 18 **dadurch gekennzeichnet, dass** das Winkelgetriebe (14) des zweiten Antriebs (7) das Drehmoment der Motorwelle des Motors (9) des zweiten Antriebs (7) um den Winkel α mit 70° ≤ α ≤ 110°umlenkt, derart dass eine geometrische Motorwellenachse, um welche die Motorwelle des Motors (9) des zweiten Antriebs (7) zur Rotation angetrieben ist, mit der zweiten geometrischen Antriebsachse (8) den Winkel α mit 70° ≤ α ≤ 110° einschließt.

20. Industrieroboter nach Anspruch 19, **dadurch gekennzeichnet, dass** die geometrische Motorwellenachse des Motors des zweiten Antriebs (7) mit der ersten geometrischen Antriebsachse (5) einen Winkel β zwischen 10° und 70°, bevorzugt zwischen 20° und 60°, besonders bevorzugt zwischen 25° und 45° einschließt.

21. Industrieroboter nach einem der vorhergehenden Ansprüche, **dadurch gekennzeichnet, dass** der dritte Antrieb (11), welcher den Armausleger (10) um die dritte geometrische Antriebsachse (12) relativ zu der Schwinge (6) rotiert, an dem Karussell (3) angeordnet ist, dass der dritte Antrieb (11) einen Motor (13) und ein Winkelgetriebe (15) aufweist, welches das Drehmoment einer Motorwelle des Motors (13) des dritten Antriebs (11) um einen vorgegebenen Winkel γ umlenkt, und dass die Kinematik mit einer Treibstange (16) ausgestattet ist, welche das Drehmoment des dritten Antriebs (11) von dem Winkelgetriebe (15) auf den Armausleger (10) überträgt.

22. Industrieroboter nach Anspruch 21, **dadurch gekennzeichnet, dass** das Winkelgetriebe (15) des dritten Antriebs (11) das Drehmoment der Motorwelle des Motors (13) des dritten Antriebs (11) um den Winkel γ mit 70° ≤ γ ≤ 110° umlenkt, derart dass eine geometrische Motorwellenachse, um welche die Motorwelle des Motors (13) des dritten Antriebs (11) zur Rotation angetrieben ist, zu einer geometrischen Abtriebswellenachse des Winkelgetriebes (15) des dritten Antriebs (11) einen Winkel γ mit 70° ≤ γ ≤ 110° einschließt.

23. Industrieroboter nach Anspruch 21 oder 22, soweit diese auf einen der Ansprüche 18 bis 20 rückbezogen sind, **dadurch gekennzeichnet, dass** der zweite Antrieb (7) und der dritte Antrieb (11) jeweils seitlich derart an dem Karussell (3) angeordnet sind, dass die geometrische Abtriebswellenachse des Winkelgetriebes (15) des dritten Antriebs (11) mit der zweiten geometrischen Antriebsachse (8) zusammenfällt.

24. Industrieroboter nach einem der Ansprüche 21 bis 23 soweit diese auf einen der Ansprüche 18 bis 20 rückbezogen sind, **dadurch gekennzeichnet, dass** die geometrische Motorwellenachse des Motors (9) des zweiten Antriebs (7) und die geometrische Motorwellenachse des Motors (13) des dritten Antriebs (11) parallel zueinander sind.
